# EUROPEAN PATENT APPLICATION

(11) **EP 3 742 378 A1**
(43) Date of publication of application: **25.11.2020**
(21) Application number: 20186252.1
(22) Date of filing: 21.02.2014
(51) Int. Cl.: G06Q 30/06, G06F 9/445

(54) **METHOD AND SYSTEM FOR REQUESTING A CROSS-PLATFORM APPLICATION**

(30) Priority: 21.02.2013 US 201361767535 P
(62) Divisional of application: 14754141.1
(71) Applicant: Sweetlabs, Inc., San Diego, CA 92101 (US)
(72) Inventor: Bourke, Adrian, San Diego, California 92101 (US); Machado, Blake, Coronado, California 92118 (US)
(74) Representative: Patentanwaltskanzlei Matschnig & Forsthuber OG

(57) **Abstract**

A method for requesting a cross-platform application employs a recommendation client as part of the text of a web page; the recommendation client retrieves resources including a recommendation list from a recommendation server, wherein recommendation presentation resources in the recommendation list can be utilized to present a recommendation and recommendation fulfillment resources can be utilized to facilitate fulfillment of an accepted recommendation. Using the recommendation presentation resources a recommendation of a cross-platform application is presented, and when the recommendation is accepted, the recommendation fulfillment resources are utilized to fulfill the accepted recommendation. A URL link in the recommendation fulfillment resources can be used to retrieve the cross-platform application, which comprises a background page containing logic of the cross platform application and a set of one or more pop-up pages. The background page is used to implement the logic of the retrieved cross-platform application, and a user interface is implemented for the cross-platform application having a rendering engine layer and an integration layer that exposes a number of APIs that can be called by the cross-platform application to make modifications to the computing environment.

## Description

### FIELD OF THE INVENTION

The present invention is generally related to software applications and more specifically to recommendation clients hosted on remote servers that can be downloaded for non-native execution within a runtime environment provided by an application platform application on a local computing device.

### BACKGROUND

A runtime environment can allow an application to be integrated into the computing environment of a computing device. Typically, a runtime environment is provided for applications to be implemented natively (i.e. compiled into the machine code of the computing device on which it resides) on a computing device by an operating system. However, other runtime environments can be provided for applications to be implemented non-natively on a computing device, such as web applications that can operate within a virtual machine (due to being written in the bytecode of the virtual machine and not the machine code of the computing device) provided by a web browser that operates natively on a computing device.

A web browser is an application that typically retrieves and presents information found on web pages maintained by content servers over a network. A web page is typically stored as one or more text files formatted in browser supported formats such as, but not limited to, markup languages (such as, but not limited to, HyperText Markup Language (HTML) as defined by the World Wide Web Consortium), scripts (such as, but not limited to, JavaScript and/or other scripts that incorporate ECMAScript as defined by the ECMA TC-39 committee of the Mozilla Foundation) and style sheets (such as, but not limited to, cascading style sheets (CSS) as defined by the World Wide Web Consortium) that can be displayed by a web browser.

### SUMMARY OF THE INVENTION

Systems and methods for presenting recommendations on a computing device using a recommendation client that can execute non-natively within a runtime environment provided by an application platform application and/or within a web browser application are illustrated. In one embodiment, a method for presenting recommended applications includes transmitting application recommendation request data using a recommendation client, where the application recommendation data includes metadata describing the class of computing device corresponding to the recommendation client, obtaining application recommendation data based on the transmitted application recommendation request data using the recommendation client, where the application recommendation data includes references to at least one hosted application, presenting the application recommendation data within a computing environment generated by the operating system of the recommendation client using the recommendation client, where the recommendation client is configured to present the application data using an application platform application including an integration layer and a rendering layer, receiving interaction data indicative of at least one interaction with the application recommendation data using the recommendation client, recording outcome information based on the received interaction data using the recommendation client, and transmitting the recorded outcome information using the recommendation client.

### BRIEF DESCRIPTION OF THE DRAWINGS

FIG. 1 is a network diagram illustrating multiple computing devices that are configured by a recommendation client that executes within a runtime environment provided by an application platform application in accordance with an embodiment of the invention.
FIG. 2A conceptually illustrates a software stack in which a recommendation client can execute as part of a cross platform application in accordance with an embodiment of the invention.
FIG. 2B conceptually illustrates a software stack in which a recommendation client can execute as part of an application platform application in accordance with an embodiment of the invention.
FIG. 2C conceptually illustrates a software stack in which a recommendation client can execute utilizing a rendering engine in accordance with an embodiment of the invention.
FIG. 3 is a flowchart illustrating a process for generating a prioritized recommendation list in accordance with an embodiment of the invention.
FIG. 4 is a flowchart illustrating a process for generating outcome information in accordance with an embodiment of the invention.
FIG. 5 is a flowchart illustrating a process for presenting recommendations with an embodiment of the invention.
FIG. 6 is a flowchart illustrating a process for returning a recommendation list in response to receiving a recommendation list request in accordance with an embodiment of the invention.
FIG. 7 is a screenshot where recommendations from a recommendation client are presented within the user interface of an application platform application in accordance with an embodiment of the invention.
FIG. 8 is a screenshot where recommendations from a recommendation client are presented using a rendering engine in accordance with an embodiment of the invention.

### DETAILED DESCRIPTION

Turning now to the drawings, systems and methods for presenting recommendations on a computing device using a recommendation client are illustrated. In many embodiments, the recommendations are presented by recommendation client application that can execute non-natively within a runtime environment provided by an application platform application and/or within a web browser application. A recommendation is information that when presented in a user interface provides information concerning a product or service and includes recommendation resources that can be utilized by a recommendation client to perform an action in response to an acceptance and/or an action in response to a presented recommendation. Recommendation resources can include, but are not limited, uniform resource locators (URLs) that allow the recommendation client to request fulfillment of a recommendation and/or content (e.g. text, images, audio, video, and or URLs identifying remotely stored content) that can be used to display the recommendation within the user interface generated within the computing environment of the computing device by the recommendation client. In several embodiments, the computing environment is created using an operating system (separate from the application platform application) installed on the computing device. In many embodiments, the recommendation client is hosted on a remote server and is downloaded for execution on the computing device. In a number of embodiments, recommendation data is prepared in a batch manner by a recommendation server and the recommendation client retrieves the recommendation data and filters it to display relevant recommendations within the computing environment of a computing device. In several embodiments, the relevancy of recommendations is determined based upon a relevancy score calculated based upon fulfillment rates for the recommendation. In a number of embodiments, fulfillment rates consider profile information associated with a specific computing device.

In several embodiments, the application platform application within which a recommendation client executes provides a runtime environment that is at least partially natively implemented while providing an intuitive user interface that is integrated with the computing environment created by the operating system of the computing device. The application platform application can provide a user access to organize and discover applications, including cross platform applications that can execute within the runtime environment. The runtime environment also provides mechanisms by which the cross platform applications can communicate with native processes including operating system processes. In many embodiments, the cross platform applications are not natively implemented, but rather are implemented non-natively and configured to be executed by the application platform application. In several embodiments, the cross platform applications are implemented using web technologies including, but not limited to, Hypertext Markup Language (HTML), JavaScript, and/or Cascading Style Sheets (CSS). The application platform application also facilitates the integration of the cross platform applications with a desktop computing environment. For example, the cross platform application can have launch points within a computing environment (e.g. desktop icons, taskbar icons, and/or any other interactive element of the computing environment) and can provide notifications in ways including, but not limited to, updating a desktop or taskbar icon by applying badges to the icon. A launch point is a feature of the computing environment of the computing device that allows a user to launch a cross platform application or bring a user interface of the cross platform application to the foreground. In many embodiments, cross platform applications are continuously executed within the runtime environment of the application platform application and a launch point within the computing environment provides a mechanism for a user to bring a user interface of the cross platform application to the foreground and/or to prompt the cross platform application to provide notifications.

In many embodiments, an application platform application includes a rendering engine layer and an integration layer. The rendering engine layer includes various parsers and virtual machines associated with supporting specific web technologies including, but not limited to, HTML, JavaScript, and CSS. The rendering engine layer is able to perform all of the functions of the rendering engine of a web browser, providing execution of cross platform applications implemented using web technologies in a similar way to the manner in which native applications execute within a computing environment, i.e. without the need to launch a web browser application to execute the cross platform application. However, the cross platform applications are not constrained in the way that web applications are typically constrained to specific web browser instances. The integration layer exposes a number of APIs that can be called by a cross platform application to make modifications to a computing environment. In several embodiments, the integration layer APIs are JavaScript APIs that can be called by a cross platform application running within the runtime environment created by the application platform application. In response to the API calls, the integration layer can communicate with the operating system and/or other natively implemented processes to modify the computing environment. The integration layer facilitates the integration of the cross platform application with a desktop computing environment and communication with natively implemented processes to provide functionality including (but not limited to) desktop launch points and notifications based upon data pulled from remote servers by the application. Although cross platform applications and the application platform application can be implemented in accordance with embodiments of the invention so that the cross platform applications are implemented using technologies similar to those utilized by web applications, the runtime environment created by the application platform application can allow the creation and execution of cross platform applications built using any of a variety of technologies and are not limited to the technologies utilized by web applications as appropriate to the requirements of specific embodiments of the invention. Various application platform applications that can create a runtime environment in which non-natively implemented cross platform applications can execute are discussed in U.S. Application No. 13/164,740, filed June 20, 2011 and titled "Systems and Methods for Integration of an Application Runtime Environment into a User Computing Environment," the disclosure of which is hereby incorporated by reference in its entirety.

In many embodiments, a recommendation client can execute utilizing the runtime environment provided by an application platform application to present recommendations to a user via a user interface displayed by a computing device. A recommendation (e.g. application recommendation data) includes information that, when presented in a user interface, provides details concerning a product or service and includes recommendation resources that can be utilized by a recommendation client to perform an action in response to an acceptance of (or any other interaction with the presented recommendation) and/or the presentation of a presented recommendation. A recommendation client can utilize the runtime environment provided by the application platform application in various ways such as, but not limited to, indirectly by being executed as part of a cross platform application that utilizes the runtime environment of the application platform application or directly by utilizing the runtime provided by the application platform application for display within a user interface of the application platform application. In certain embodiments, a recommendation client can also directly utilize the runtime environment by executing as a cross platform application configured to present recommendations to users that are downloaded from a remote server or retrieved from a cache. In a variety of embodiments, the cache is implemented utilizing local storage (e.g. memory) on a computing device so that the recommendations can be retrieved and displayed without communicating with a remote server. In particular, embodiments, a recommendation client can execute by using a rendering engine capable of performing the functions of the rendering engine of a web browser with a Java virtual machine. In several embodiments, a recommendation client can be implemented as instructions that can be compiled to execute using a virtual machine provided by the rendering engine layer of an application platform application.

In several embodiments, a recommendation client can send a recommendation list request to a recommendation server. A recommendation server can process the recommendation list request and query a recommendation database to retrieve a recommendation list in accordance with at least one recommendation list selection rule. In certain embodiments, a recommendation list request includes a request for a particular recommendation list along with additional information concerning the computing device that provided the request that can be utilized by the recommendation server to query, retrieve, and return an appropriate recommendation list. In various embodiments, a recommendation list request can include information concerning the computing device that made the request such as, but not limited to, the geographic location of the computing device on which the recommendation client is executing and the computing device's model number or stock keeping unit identifier (SKU). In addition, a request for a particular recommendation list such as, but not limited to, a recommendation list of recommendations for applications that can be installed and run by the application platform application (such as by the particular model number of SKU of the computing device) or a recommendation list of recommendations for particular products or services can be provided. In various embodiments, a recommendation list request can also include information concerning the hardware configuration of the computing device that made the request such as but not limited to the hardware capabilities of the computing device, including the presence of particular types of input devices such as keyboards, touchscreens and other tactile input devices, 3D cameras and other motion tracking devices, and voice and audio recognition devices, on which the recommendation client is executing in addition to a request for a particular recommendation list (such as but not limited to a recommendation list of recommendations for applications that can be installed and run by the particular hardware configuration of the computing device, or that are compatible with the hardware configuration or types of input devices available on the computing device). In various embodiments, a recommendation list request can also include information concerning the physical orientation of the computing device that made the request, such as but not limited to whether certain input or output devices of the computing device are in landscape or portrait mode, or whether they are lying flat or upright. In other embodiments, a recommendation list request can also include information concerning whether certain input or output devices of the computing device that made the request are available or in use, such as but not limited to whether the keyboard of the computing device is attached, available, enabled, or in use. In several embodiments, a recommendation server can utilize a recommendation list selection rule to process a recommendation list request to return one or more recommendation lists targeting a class of computing devices, or that targets the particular hardware configuration of computing devices, the physical orientation of the computing device, or the particular input or output devices that are available or enabled on a computing device, such that a recommendation client can utilize the recommendation list to provide relevant recommendations with respect to the computing device, or the hardware configuration, or physical orientation of the computing device, or input or output devices that are available or enabled on the computing device, on which the recommendation client is executing.

In numerous embodiments, a recommendation list is a set of data that includes recommendation resources associated with at least one recommendation. In certain embodiments, a recommendation list is not prioritized and does not present recommendation resources associated with recommendations in any order of priority. In particular embodiments, a recommendation list is generated with recommendation resources for presentation of relevant recommendations for a recommendation client executing on a particular class of computing devices or executing on computing devices with a particular the hardware configuration, or physical orientation, or executing on computing devices with particular input or output devices that are available or enabled on the computing device. The recommendation resources can include, but are not limited to, recommendation selection resources that can be utilized by a recommendation client to generate a prioritized recommendation list (such as, but not limited to, outcome information concerning the compatibility of a particular recommendation with the hardware configuration or physical orientation of the computing device, or compatibility with the input or output devices that are available or enabled on the computing device, or the fulfillment rate or popularity among users for a particular recommendation), recommendation presentation resources that can be utilized by the recommendation client to present a recommendation (such as, but not limited to, pictures, text, video data, and audio data used to constitute a presented recommendation), and recommendation fulfillment resources used by a recommendation client to facilitate fulfillment of an accepted recommendation such as, but not limited to, a URL link or an access code used for recommendation fulfillment. In certain embodiments where a recommendation is for a cross platform application, recommendation selection resources can include information concerning the cross platform application's popularity, whether the cross platform application collects a fee for use and statistics derived from outcome information concerning historical fulfillment of the recommendation for a cross platform application. Recommendation presentation resources can include any text, pictures, audio, video, and any other content that can be displayed in the presentation of the recommendation for a cross platform application. Recommendation fulfillment resources can include a URL that can be utilized when the recommendation for a cross platform application is accepted.

In a number of embodiments, a recommendation client can generate a prioritized recommendation list from the recommendation list received from a recommendation server in accordance with at least one recommendation list priority rule. The recommendation client using the recommendation list priority rule can perform any process to generate a prioritized recommendation list including, but not limited to, by filtering previously fulfilled recommendations (or filtering recommendations that may not be compatible with the hardware configuration or physical orientation of the computing device or with the input or output devices that are available or enabled on the computing device) and assigning priority to each remaining recommendation. In certain embodiments, the priority assigned to a recommendation can be randomized and/or periodically updated based upon the recommendation resources associated with the recommendation in accordance with a recommendation list priority rule. In particular embodiments, recommendation fulfillment can occur in response to receipt of instructions via a user interface presented within the computing environment of the computing device. Recommendation fulfillment can involve acceptance of the recommendation, rejection of the recommendation, and disablement of the recommendation. However, any other actions related to the fulfillment of recommendations can be utilized in accordance with embodiments of the invention. In certain embodiments, each remaining recommendation is prioritized to generate a prioritized recommendation list by utilizing recommendation resources (such as, but not limited to, recommendation selection resources) associated with each remaining recommendation in accordance with the recommendation priority rule, such as, but not limited to, by prioritizing recommendations with a greater number of instances of being fulfilled when presented by a recommendation client from information found in associated recommendation selection resources.

In numerous embodiments, a recommendation client can present recommendations from a prioritized recommendation list to users via a user interface displayed by the computing device on which the recommendation client is executing in accordance with at least one recommendation presentation rule. The recommendation presentation rule can dictate how recommendations are presented, such as, but not limited to, how many recommendations can be presented in a user interface at a given time, the configuration of presented recommendations upon a user interface and the type of recommendations that can be presented. In certain embodiments, a recommendation client can present recommendations from a prioritized recommendation list utilizing recommendation presentation resources associated with the recommendation. The recommendation client can present recommendations in a user interface by utilizing a rendering engine layer of an application platform application with various parsers and virtual machines associated with supporting specific web technologies including, but not limited to, HTML, JavaScript, and CSS. In certain embodiments, each presented recommendation is configured to be fulfilled utilizing recommendation fulfillment resources associated with a recommendation to be fulfilled upon acceptance and/or selection of the recommendation via a user interface displayed by the computing device on which the recommendation client is executing.

In a variety of embodiments, a recommendation client can monitor user interaction with presented recommendations to generate outcome information concerning user interaction with the presented recommendations. The outcome information can be any information related to an interaction with presented recommendations such as, but not limited to, the fulfillment of particular recommendations and/or the frequency of presentation of a recommendation. The outcome information can be sent to a recommendation server configured to update recommendation selection resources associated with a recommendation based upon the outcome information.

In many embodiments, a recommendation client is hosted by a remote recommendation server and is downloaded for execution on a local computing device. The latest version of the recommendation client can be downloaded from a recommendation server periodically or upon the occurrence of a particular trigger event determined by the logic of a currently executing recommendation client (i.e. the previous version), a recommendation server that communicates the availability of an update to the currently executing recommendation client, and/or the application platform application. The recommendation client can be stored locally within a cache provided by an application platform application for or by a cross platform application. In certain embodiments, refreshing the recommendation client includes replacing a cached recommendation client with a version of the recommendation client maintained by a remote recommendation server.

It should be noted that any of the various systems and processes described herein can be performed in sequence, in alternative sequences, and/or in parallel (e.g. on different computing devices) in order to achieve similar results in a manner that is more appropriate to the requirements of a specific application of the invention. Recommendation clients in accordance with embodiments of the invention are discussed further below.

### System Architecture

Recommendation clients in accordance with many embodiments of the invention execute non-natively on a network connected computing device and present recommendations within the computing environment of the computing device based upon recommendations generated by a recommendation server and presented to recommendation client based upon the characteristics, hardware configuration, or physical orientation of the computing device or based upon the input or output devices that are available or enabled on the computing device. The recommendations can be filtered by the recommendation server and/or the recommendation client as appropriate to the requirements of specific embodiments of the invention. In several embodiments, a recommendation client can draw upon resources provided by a recommendation server, such as, but not limited to, a recommendation list and other resources that allow the recommendation client to present recommendations in a user interface displayed within the computing environment of a computing device. In certain embodiments, the recommendation client is hosted on a recommendation server and a computing device can periodically check for updates and download the current version of the recommendation client. In several embodiments, a recommendation server is part of a recommendation server system that includes at least one recommendation server that services the recommendation client by providing recommendation data to the recommendation client that can format the recommendation data for display within the computing environment of the computing device using the application platform application.

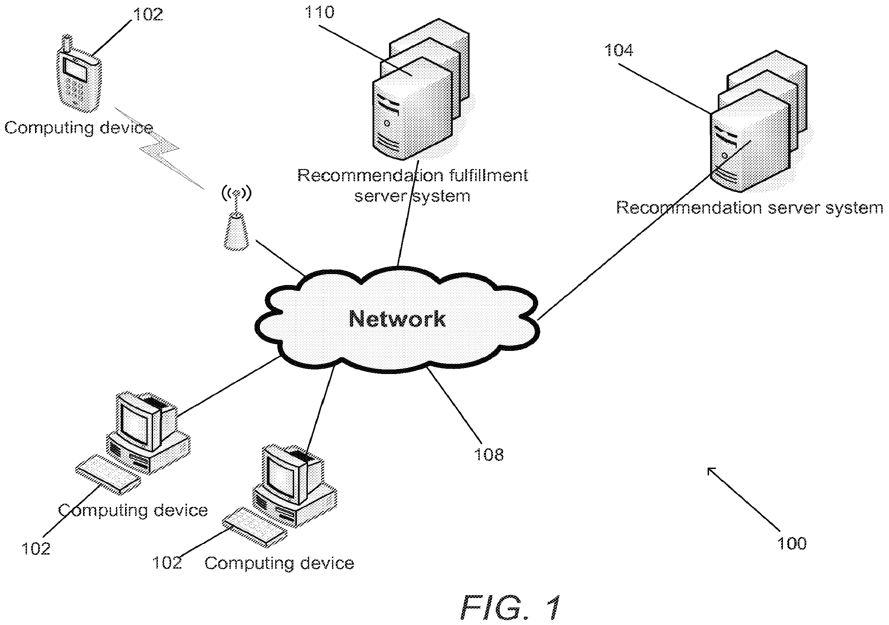

A network diagram illustrating local computing devices configured by recommendation clients in accordance with an embodiment of the invention is illustrated in FIG. 1. The network 100 includes a number of local computing devices 102 connected to recommendation servers of a recommendation server system 104 over a network 108 such as (but not limited to) the Internet. The local computing devices are also configured to communicate with one or more recommendation fulfillment server systems 110. A recommendation client executes within the computing environment created by the operating system on each local computing device 102. Certain computing devices can include recommendation clients executing within a runtime environment provided by an application platform application (including a rendering engine layer and an integration layer) executing within the computing environment of the computing device. The execution of the application platform application creates a runtime environment on each local computing device 102 in which one or more recommendation clients can be initially loaded from a recommendation server of a recommendation server system 104 to be cached on the computing device and executed. In many embodiments, the recommendation clients obtain recommendation data that can be presented via a user interface within the computing environment of a computing device 102. The recommendation data can identify a recommendation fulfillment server system 110 with which the recommendation client can interact in response to a user accepting a recommendation displayed via the user interface within the computing environment of the computing device 102. In many embodiments, the recommendation fulfillment server system is a web server from which the recommendation client can request text files associated with a web page identified in a URL contained within recommendation data of an accepted recommendation. In many embodiments, the recommendation fulfillment server system is an application server from which the recommendation client can request a cross-platform application or a native application identified by a URL contained within recommendation data of an accepted recommendation. Although specific recommendations and recommendation fulfillment server systems are discussed above, any of a variety of recommendations can be displayed by recommendation clients and/or a variety of appropriate recommendation fulfillment server system can be utilized to fulfill the displayed recommendations in accordance with embodiments of the invention.

In several embodiments, a recommendation client can utilize the runtime environment provided by an application platform application to provide recommendations to the user. In certain embodiments, a cross platform application is implemented using web technologies including, but not limited to, HTML, JavaScript, and/or CSS. A cross platform application can be implemented using a background page that contains all of the logic of the cross platform application. The background page can be a text file (as opposed to a binary executable file) that can include HTML, JavaScript, and/or CSS that the rendering engine layer of the application platform application parses to implement the logic contained therein in a similar fashion to the way in which the rendering engine of a web browser application parses a conventional web page when providing web applications on a computing device. In addition to a background page, a cross platform application can also include one or more pop-up pages that are similar to a conventional web page and can be presented to the user to implement a user interface, notifications, and/or recommendations. The application platform application implements the logic contained within the background page to provide a user interface, notifications, and/or recommendations via various pop-up pages. In addition, APIs exposed by the application platform application can allow the logic within either the background page or the pop-up page to modify and respond to interactions at a user interface. The recommendation client can be integrated within the logic of the background page to generate recommendations presented as pop-up pages utilizing the functionalities provided by the application platform application. In particular embodiments, a recommendation client can be integrated within the logic of a pop-up page where additional pop-up pages can be loaded to present recommendations to the user. In certain embodiments, a recommendation client can be integrated within the logic of a web page running within a web browser application. In many embodiments, the recommendation client can be implemented as JavaScript that can be loaded dynamically from a remote recommendation server upon initialization of the cross platform application and/or loaded from a cache on the computing device along with the logic of the cross platform application. The recommendation client can also be hosted on a recommendation server and recommendation client can be downloaded and non-natively executed within an application platform application present on the computing device. The downloading of the recommendation client can be dictated by the logic of the recommendation client, cross platform application, or the recommendation server base on the version of the recommendation client maintained by the hosting recommendation server. In certain embodiments, a recommendation client can also utilize a runtime environment provided by an application platform application by executing as a cross platform application configured to present recommendations to users. In particular embodiments, a recommendation client that executes as a cross platform application can be called to present recommendations by other cross platform applications.

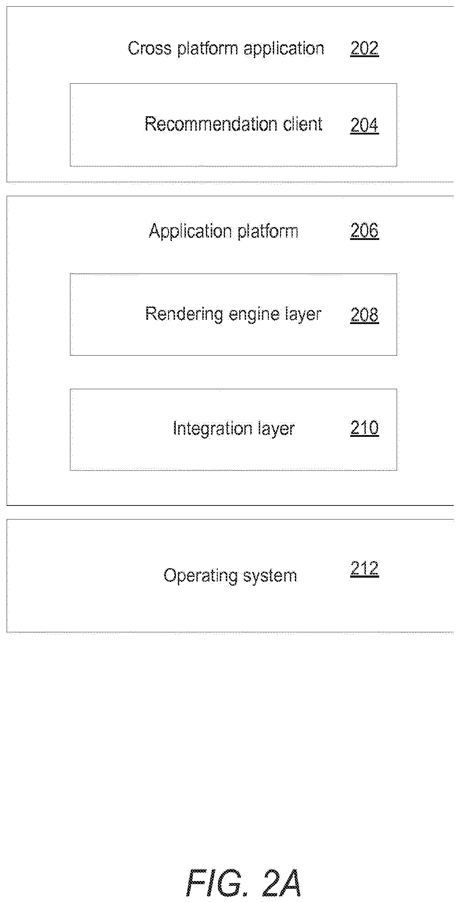

A conceptual illustration of a software stack in which a recommendation client can execute as part of a cross platform application in accordance with an embodiment of the invention is illustrated in FIG. 2A. The software stack includes a cross platform application 202 that is created using the same technology that can be used to implement web applications including, but not limited to, HTML, JavaScript, and/or CSS. A recommendation client 204 can execute as part of the cross platform application 202 to present recommendations as pop-up pages presented in a user interface displayed by a computing device. The cross platform application 202 is executed by an application platform application 206that includes a rendering engine layer 208 and an integration layer 210. The application platform application 206 is at least partially natively implemented so that it can integrate with the computing environment generated by the computing device's operating system 212, allowing the cross platform application 202 to communicate with operating system processes and/or other natively implemented processes.

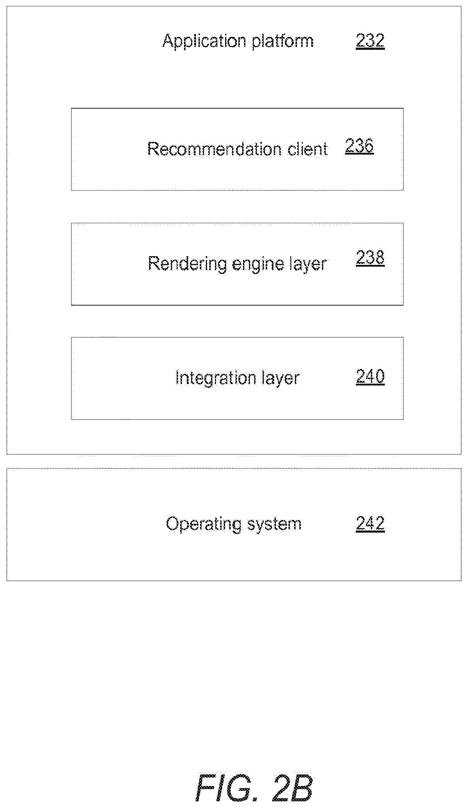

In several embodiments, a recommendation client can be called by an application platform application during the execution of the application platform application. An application platform application can be configured by the logic of the application platform application to present recommendations from the recommendation client as part of the user interface generated by the application platform application. In certain embodiments, the user interface generated by the application platform application can be implemented utilizing web technologies including, but not limited to, HTML, JavaScript, and/or CSS similar to the implementation of a cross platform application. A conceptual illustration of a software stack in which a recommendation client can execute as part of an application platform application in accordance with an embodiment of the invention is illustrated in FIG. 2B. The software stack includes logic that implements a user interface for the application platform application 232. A recommendation client 236 can be integrated into the application platform application to present recommendations in the user interface of the application platform application 232. The application platform application 232 includes a rendering engine layer 238 and an integration layer 240 capable of providing a runtime environment for cross platform applications and which can be used to support the logic of the application platform application for display of the application platform application's user interface. The application platform application 232 can be at least partially natively implemented to be integrated within the computing environment generated by the computing device's operating system 242. Furthermore, multiple cross platform applications can execute utilizing the runtime environment provided by the application platform application 232.

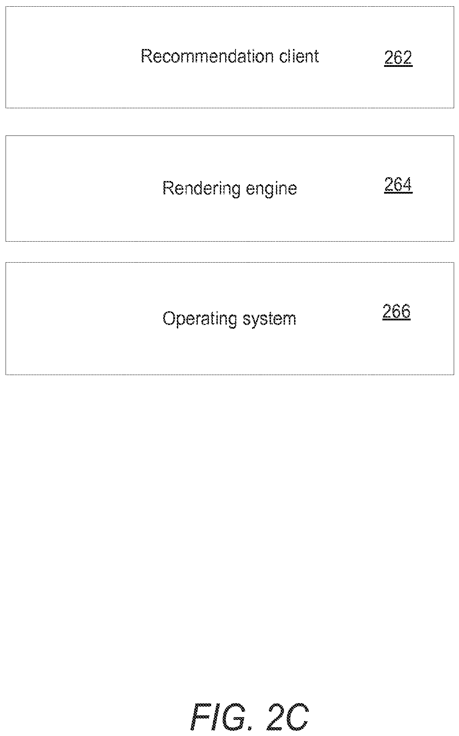

In numerous embodiments, a recommendation client 236 causes a rendering engine to present recommendations. A recommendation client can be implemented utilizing web technologies such as, but not limited to, JavaScript and integrated within a text file that can include HTML, JavaScript, and/or CSS such that a rendering engine can parse the text file to implement the logic contained within the text file similar to parsing a conventional web page when providing web applications on a computing device. In certain embodiments, a recommendation client can execute as part of the text of a conventional web page running within a conventional web browser. A conceptual illustration of a software stack in which a recommendation client can execute as part of a cross platform application in accordance with an embodiment of the invention is illustrated in FIG 2C. The software stack includes a recommendation client 262 that can present recommendations within a user interface displayed by a computing device by utilizing a rendering engine 264 that is integrated within the computing environment generated by the computing device's operating system 266.

Although specific systems that utilize recommendation clients to present recommendations within an application platform application are discussed above, systems that use recommendation clients to present recommendations within an application platform application can be implemented in any manner as appropriate to the requirements of a specific application in accordance with embodiments of the invention. Processes for presenting recommendations using a recommendation client in accordance with embodiments of the invention are described below.

### Presentation of Recommendations

Recommendation clients in accordance with many embodiments of the invention can perform a variety of processes to provide the presentation of recommendations on a user interface displayed by a computing device. In several embodiments, a recommendation client is configured to send a recommendation list request to a recommendation server. A recommendation list request includes a request for a recommendation list from a recommendation server along with information concerning the computing device that made the request that can be utilized by the recommendation server to query, retrieve, and return an appropriate recommendation list. The recommendation list request can include a request for a particular recommendation list along with information concerning the computing device that made the request such as but not limited to a geographic location, hardware configuration and physical orientation of the computing device on which the recommendation client is executing, the particular input or output devices that are available or enabled on the computing device on which the recommendation client is executing, a type of recommendation list requested, configuration information concerning the software running on the computing device and a type of recommendation list with recommendations that are optimized or preferred for the computing device, hardware configuration or physical orientation of the computing device, or the particular input or output devices that are available or enabled on the computing device. In a variety of embodiments, the configuration information identifies the class of computing device associated with the recommendation device. The class of computing device can include information describing the hardware capabilities of the computing device, such as screen resolution, screen orientation, available input devices (mouse, keyboard, camera, touch sensors, gyroscopes, altimeters, location sensing devices such as a Global Positioning System (GPS) receiver, cameras, etc...), operating system version, total memory, available memory, and any other hardware device or software installed on the computing device as appropriate to the requirements of specific embodiments of the invention. A recommendation server can process the recommendation list request to query a recommendation database to retrieve a recommendation list in accordance with at least one recommendation list selection rule that configures the recommendation server to process the information provided within the recommendation list request. In several embodiments, a recommendation server can utilize a recommendation list selection rule to process a recommendation list request to return a recommendation list that targets a class of computing devices, the hardware configuration or physical orientation of the computing device, or the particular input or output devices that are available or enabled on the computing device, such that a recommendation client can utilize the recommendation list to provide relevant recommendations with respect to the class of computing device, the hardware configuration or physical orientation of the computing device, or the particular input or output devices that are available or enabled on the computing device, on which the recommendation client is executing. In several embodiments, the information identifying a user of the computing device can be used to tailor the recommendation list to the specific user. This user information can include demographic information, location information, information regarding previously recommended applications, information regarding applications acquired, installed, and/or uninstalled by the user, and computing devices associated with the user along with any other user information as appropriate to the requirements of specific embodiments of the invention.

In many embodiments, a recommendation list is a set of data that includes recommendation resources associated with at least one recommendation. The recommendation list can be stored in a recommendation database accessible to the recommendation server that processes the recommendation list request. Metadata derived from the recommendation list request can be utilized that identifies a recommendation list. A recommendation server can use the metadata to query and retrieve (or otherwise generate) an appropriate recommendation list. The recommendation list can be sent from a recommendation server to the recommendation client that furnished the recommendation list request. In certain embodiments, a recommendation list is not prioritized and does not present recommendation resources associated with recommendations in any order of priority. Thereby, a recommendation client can prioritize the recommendation list in accordance with at least one recommendation list priority rule to generate a prioritized recommendation list. A recommendation list priority rule can instruct a recommendation client to generate a prioritized recommendation list in various ways including, but not limited to, by filtering fulfilled recommendations and assigning priority to each remaining recommendation in accordance with recommendation selection resources (such as, but not limited to, giving higher priority to recommendations with a greater number of instances of being fulfilled when presented by a recommendation client). In many embodiments, different recommendation clients can apply different recommendation list priority rules appropriate to the specific computing device executing the recommendation client and/or user of the computing device. In several embodiments, the recommendations presented by a recommendation client are selected in a random manner such as (but not limited to) using a weighted randomization algorithm, where weighting are applied based upon factors including (but not limited to) relevance. A recommendation list can include recommendation resources associated with at least one recommendation including, but not limited to, recommendation selection resources that can be utilized by a recommendation client to generate a prioritized recommendation list, recommendation presentation resources that can be utilized by the recommendation client to present a recommendation and recommendation fulfillment resources used by a recommendation client to facilitate fulfillment of an accepted recommendation. Recommendation selection resources can include any resource that can be utilized by a recommendation client in prioritizing recommendations in accordance with at least one recommendation list priority rule such as, but not limited to, outcome information generated by a recommendation client based upon interactions with presented recommendations, popularity ratings for the recommendation, identifying information related to a recommendation (such as, but not limited to, whether an application has a certain identification code), compatibility of recommendations with the hardware configuration or physical orientation of the computing device, compatibility of recommendations with the input or output devices that are available or enabled on the computing device, and whether the recommendation requires a fee for fulfillment of a recommended product. Recommendation presentation resources can include any presentation resources such as, but not limited to, pictures, text, video, audio, and/or scripts that can be used to constitute a presented recommendation. Recommendation fulfillment resources can include any resource that can be utilized to fulfill an accepted recommendation, such as, but not limited to, a URL link and/or an access code that can be used to retrieve an accepted recommendation. In certain embodiments where a recommendation is for a product (such as, but not limited to, an application or a physical object that can be purchased over a network), recommendation selection resources can include information concerning the product's popularity, whether the product collects a fee for use, and statistics derived from outcome information concerning historical fulfillment of the recommendation for that product. Recommendation presentation resources can include any text and pictures that can be displayed in the presentation of the recommendation for the product. Recommendation fulfillment resources can include a URL that can be utilized when the recommendation for the product is accepted.

Although various configurations of recommendation clients for retrieval of a recommendation list are discussed above, recommendation clients can be configured to retrieve recommendation lists in any manner as appropriate to the requirements of a specific application in accordance with embodiments of the invention. Generation of a prioritized recommendation list in accordance with embodiments of the invention is described below.

### Generating a Prioritized Recommendation List

In numerous embodiments, a prioritized recommendation list is a recommendation list where the recommendations have been assigned a priority in accordance with at least one recommendation list priority rule that can be utilized in the selection of one or more recommendations for presentation by the recommendation client. In certain embodiments, priority in a prioritized recommendation list can be interpreted using at least one recommendation presentation rule such that recommendations with a higher priority are presented first and recommendations with lower priority are presented after the recommendations with higher priority are presented.

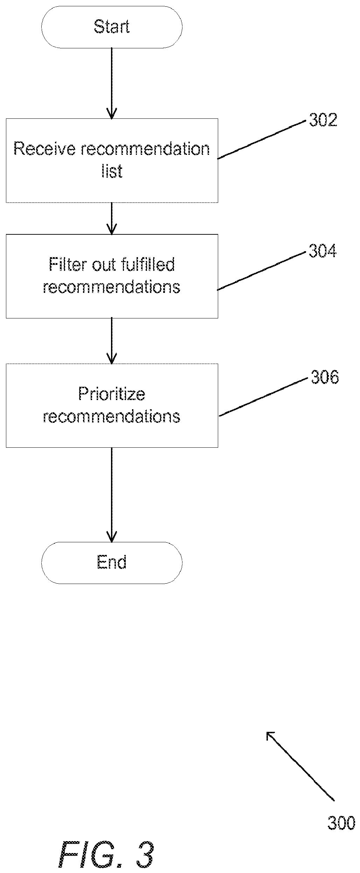

In many embodiments, a recommendation client can generate a prioritized recommendation list from a recommendation list received from a recommendation server in accordance with at least one recommendation list priority rule. The recommendation client using the recommendation list priority rule can perform any process to generate a prioritized recommendation list including, but not limited to, by filtering recommendations fulfilled by the computing device, that are incompatible with the hardware configuration or physical orientation of the computing device, or that are incompatible with the input or output devices that are available or enabled on the computing device and assigning priority to each remaining recommendation. Each remaining recommendation can be prioritized to generate a prioritized recommendation list by utilizing the recommendation resources associated with each remaining recommendation in accordance with the recommendation priority rule. In certain embodiments, a recommendation priority rule can give a higher priority to recommendations with particular characteristics as determined by recommendation selection resources, such as, but not limited to, by prioritizing recommendations with a greater number of instances of being fulfilled when presented by a recommendation client. In particular embodiments, a recommendation priority rule can consider any recommendation resources in determining a priority for recommendations in generating a prioritized recommendation list, such as, but not limited to, recommendation selection resources in conjunction with recommendation presentation resources (such as, but not limited to, assigning priority to particular recommendations based upon the presentation of the recommendation), and/or with recommendation fulfillment resources (such as, but not limited to, assigning priority to recommendations for a free product). In various embodiments, the priority assigned to a recommendation can be randomized and/or periodically updated based upon the recommendation resources associated with the recommendation in accordance with a recommendation list priority rule. A flowchart of a process for generating a prioritized recommendation list in accordance with an embodiment of the invention is illustrated in FIG. 3. The process 300 includes receiving (302) a recommendation list at a recommendation client from a recommendation server. Recommendations that have previously been fulfilled by the recommendation client are filtered (304) from the recommendation list with the remaining recommendations prioritized (306) in accordance with at least one recommendation list priority rule.

In numerous embodiments, a recommendation client can utilize the resources provided by a rendering engine to present recommendations from a prioritized recommendation list to users via a user interface displayed by a computing device on which the recommendation client is executing in accordance with at least one recommendation presentation rule. The recommendation presentation rule can dictate how recommendations are presented, such as, but not limited to, the priority level assigned to presented recommendations, how many recommendations can be presented in a user interface at a given time, the configuration of presented recommendations upon the user interface and the type of recommendations that can be presented. In certain embodiments, a recommendation client can present recommendations from a prioritized recommendation list utilizing recommendation presentation resources associated with the recommendation. In particular embodiments, the recommendation client can present recommendations in a user interface by utilizing a rendering engine layer of an application platform application with various parsers and virtual machines associated with supporting specific web technologies including, but not limited to, HTML, JavaScript, and CSS. In many embodiments, each presented recommendation is configured to be fulfilled utilizing recommendation fulfillment resources associated with a recommendation to be fulfilled upon acceptance and/or selection of the recommendation via a user interface displayed by the computing device on which the recommendation client is executing.

Although various configurations of recommendation clients for presentation of recommendations from a prioritized recommendation list are discussed above, recommendation clients can be configured to present recommendations from a prioritized recommendation list in any manner as appropriate to the requirements of a specific application in accordance with embodiments of the invention. Generation of outcome information in accordance with embodiments of the invention is described below.

### Generating Outcome Information

In a number of embodiments, outcome information can be generated from a recommendation client by monitoring user interaction with presented recommendations. The outcome information can be any information related to interaction with presented recommendations such as, but not limited to, the fulfillment of particular recommendations, a number of impressions (e.g. presentations of) of a recommendation, and/or the frequency of presentation of a recommendation. Outcome information can also include information that is useful for the generation of recommendation selection resources, such as, but not limited to, the geographic location of a particular accepted recommendation, whether the accepted recommendation is free or requires a fee to utilize, a presentation ID associated with a presented recommendation, and/or information concerning the computing device on which a recommendation is presented including the hardware configuration or physical orientation of the computing device of a particular accepted recommendation. The outcome information can be sent to a recommendation server configured to update recommendation selection resources based upon the outcome information.

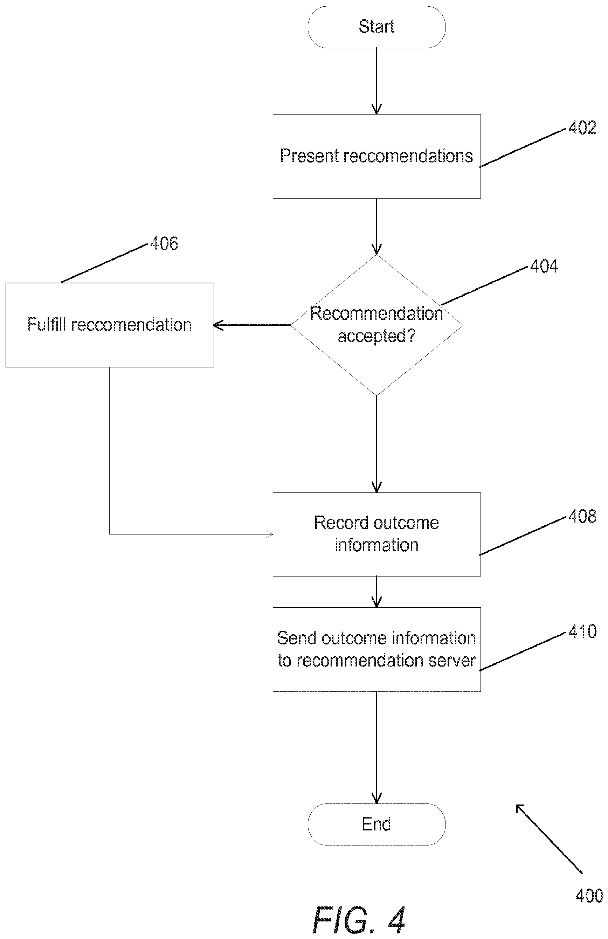

A flowchart of a process for generating outcome information using a recommendation client in accordance with an embodiment of the invention is illustrated in FIG. 4. The process 400 includes presenting (402) recommendations utilizing recommendation presentation resources and in accordance with at least one recommendation presentation rule using a recommendation client. A decision (404) can be made as to whether a presented recommendation is accepted. A presented recommendation can be accepted in any manner through the utilization of a user interface provided by the computing device including, but not limited to, an affirmative selection of an accept or install button on a user interface that presents the recommendation. If the presented recommendation is accepted or installed, the accepted or installed recommendation can be fulfilled (406) utilizing recommendation fulfillment resources and outcome information can be recorded concerning the accepted recommendation. If the presented recommendation is not accepted or installed, outcome information concerning interaction with the presented recommendation can be recorded (408). The outcome information can be sent (410) to a recommendation server to update recommendation selection resources.

Although various configurations of recommendation clients for generation of outcome information are discussed above, recommendation clients can be configured to generate outcome information in any manner as appropriate to the requirements of a specific application in accordance with embodiments of the invention. Aspects of recommendation clients hosted on a recommendation server for downloading and non-native execution within an application platform application on a computing device in accordance with embodiments of the invention are described below.

### Hosted Recommendation Clients

In many embodiments, a recommendation client executes on a local computing device while being hosted by a remote recommendation server over a network. The recommendation client can be refreshed on the computing device to a version of the recommendation client stored on a recommendation server. The recommendation client can be downloaded in any manner including, but not limited to, being downloaded periodically and/or upon the occurrence of a particular trigger event as determined by the logic of a recommendation client, remote server that hosts the recommendation client, application platform application, cross platform application or web page within which the recommendation client is running. The recommendation client can be stored locally on the local computing device within a cache while being hosted by a remote recommendation server to be downloaded utilizing resources received from the remote recommendation server that hosts the recommendation client. In certain embodiments, downloading the recommendation client includes replacing a cached recommendation client with a version of the recommendation client maintained by a remote recommendation server that hosts the recommendation client.

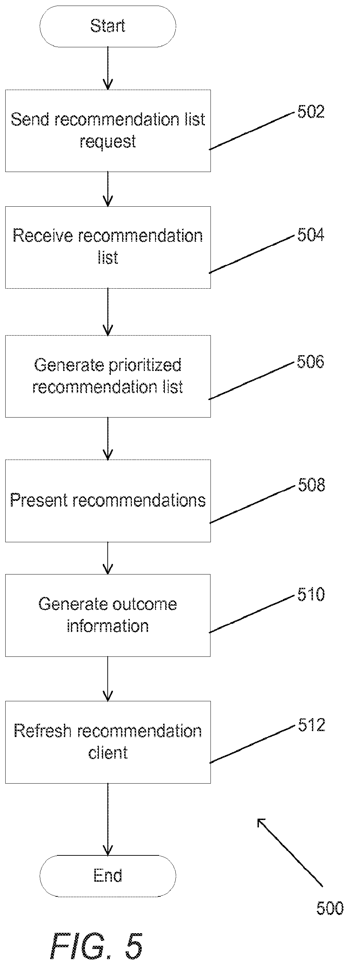

A flowchart of a process for presenting recommendations in accordance with an embodiment of the invention is illustrated in FIG. 5. The process 500 includes a recommendation client sending (502) a recommendation list request. In many embodiments, the recommendation list request includes recommendation list request data transmitted to a recommendation server. The recommendation client can receive (504) a recommendation list from a recommendation server and generate (506) a prioritized recommendation list in accordance with at least one recommendation list priority rule using the received recommendation list and associated recommendation resources received from the recommendation server. The recommendation client can present (508) recommendations utilizing recommendation presentation resources associated with the recommendations within the prioritized recommendation list in accordance with at least one recommendation presentation rule. Outcome information can be generated (510) by the recommendation client concerning interactions with presented recommendations and sent to a recommendation server to update recommendation selection resources. The recommendation client can also be configured to refresh (512) itself by downloading a more recent version of the recommendation client that is hosted on a recommendation server.

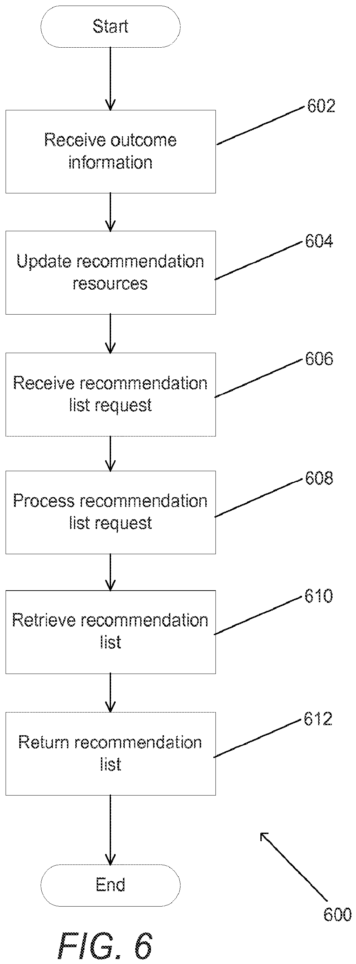

A flowchart of a process for returning a recommendation list in response to receiving a recommendation list request in accordance with an embodiment of the invention is illustrated in FIG. 6. The process 600 includes receiving (602) outcome information from a recommendation client at a recommendation server. The received outcome information can be utilized to update (604) recommendation selection resources. The recommendation server can receive (606) a recommendation list request from a recommendation client. A recommendation list request can be processed (608) in accordance with at least one recommendation list selection rule that utilizes information concerning the computing device that made the request contained within the recommendation list request to query and retrieve (610) the proper recommendation list from a recommendation database. In several embodiments, a recommendation server can utilize a recommendation list selection rule to process a recommendation list request to return a recommendation list that targets a class of computing devices such that a recommendation client can utilize the recommendation list to provide relevant recommendations with respect to the computing device on which the recommendation client is executing. The recommendation list can be returned (612) to the recommendation client that sent the recommendation list request to the recommendation server.

Although various configurations of recommendation clients that are hosted on a recommendation server and can be downloaded for execution on a computing device are discussed above, recommendation clients can be configured to present recommendations in any manner as appropriate to the requirements of a specific application in accordance with embodiments of the invention. Presentation of recommendations using a recommendation client in a user interface displayed by a computing device in accordance with embodiments of the invention is described below.

### User Interface

Recommendation clients in accordance with many embodiments of the invention can present recommendations in a user interface displayed within the computing environment of a computing device. The recommendation client can present the recommendations in any configuration and in any location within the computing environment, such as, but not limited to, within a portion of a user interface allocated to a cross platform application, application platform application user interface and/or within the window of a web page opened using a web browser.

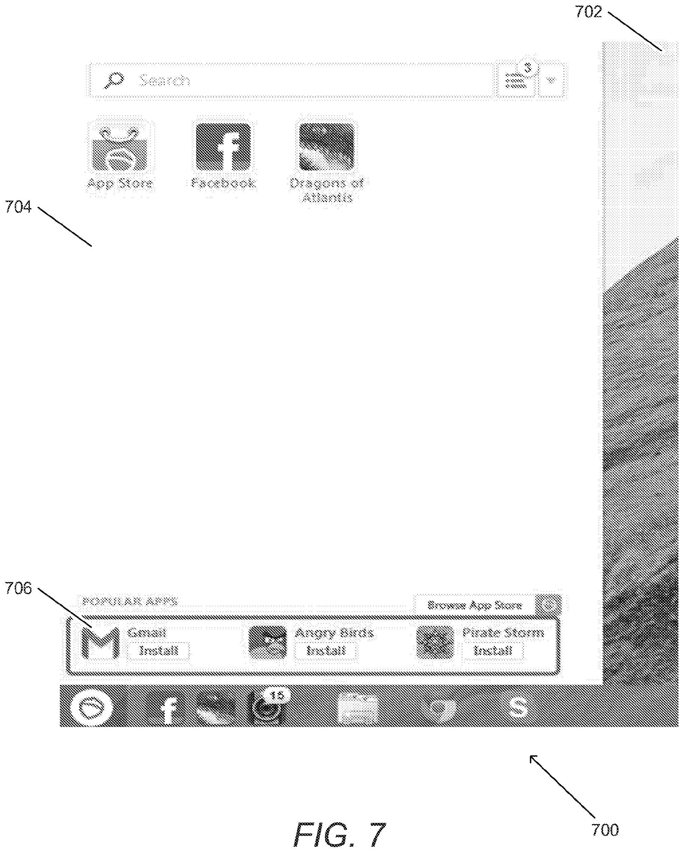

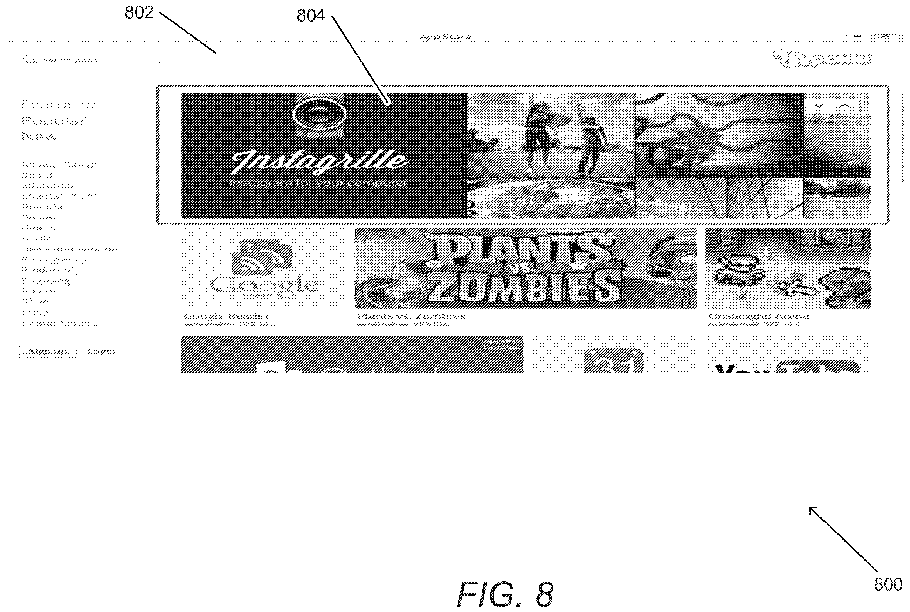

A screenshot conceptually illustrating recommendations from a recommendation client are rendered within a user interface generated by an application platform application within a computing environment created by the Windows 8 operating system distributed by Microsoft Corporation of Redmond, Washington in accordance with an embodiment of the invention is illustrated in FIG. 7. The screenshot 700 illustrates an application platform application's user interface 704 brought to the foreground of a user interface for a computing device 702. The user interface of the application platform application 704 includes a section where recommendations are presented and accepted 706. Display of recommendations using a recommendation client executing within a web browser application is conceptually illustrated in FIG. 8. The screenshot 800 conceptually illustrates a web browser's user interface 802 presenting a web page. The user interface of the web browser featuring the web page includes a section 804 where recommendations are presented. In many embodiments when a recommendation client is implemented using web technologies or any other cross-platform technology, recommendation clients implementing the same logic can execute within a cross platform application and execute using a web browser application to present the same recommendations to a user.

Although user interfaces in which recommendations can be presented by recommendation clients are discussed above, recommendation clients can utilize any user interface in any manner to present recommendations appropriate to the requirements of a specific application in accordance with embodiments of the invention. Specific implementations of application platform applications in accordance with embodiments of the invention are described below.

### Application Platform Applications

In several embodiments, applications capable of executing within a runtime environment provided by an application platform application include cross platform applications implemented using web technologies including, but not limited to, HTML, JavaScript, and/or CSS. An application platform application capable of providing a runtime environment for cross platform applications can be implemented using the combination of a rendering engine layer and an integration layer. The rendering engine layer is able to perform all of the functions of the rendering engine of a web browser, allowing execution of cross platform applications implemented using web technologies in a similar way to the manner in which native applications execute within a computing environment, i.e. without the need to launch a web browser application to execute the cross platform application. In a number of embodiments, the rendering engine layer includes various parsers and virtual machines associated with supporting specific web technologies including, but not limited to, HTML, JavaScript, and CSS. The rendering engine layer of an application platform application can interpret a cross platform application in a manner similar to the manner in which the rendering engine of a web browser facilitates the execution of a web application. Indeed, many embodiments of the invention utilize a modified version of a rendering engine developed for use in a web browser. For example, a modified version of the WebKit or WebKit2 rendering engines can be used to implement a rendering engine layer in accordance with an embodiment of the invention. In a number of embodiments, the application platform application includes instructions in a scripting language that cause a recommendation client hosted on a remote recommendation server to be downloaded or a locally cached recommendation server loaded into memory. In several embodiments, the recommendation client includes logic implemented in a scripting language that can be executed within the rendering engine process of the application platform application. In several embodiments, the recommendation client retrieves recommendation data from a recommendation server and filters the recommendation data using any of the techniques outlined above. The recommendation data can then be provided to the application platform application that can format the data into user interface templates for rendering by the rendering engine process within the computing environment of the computing device. In many embodiments, implementing the recommendation client in a cross platform manner allows the recommendation client to be loaded from within the application platform application, within a cross platform application, and/or within a web page rendered by a web browser application. Cross platform applications and the manner in which cross platform applications can incorporate calls to recommendation clients are discussed further below.

Cross platform applications are not constrained in the way that web applications are typically constrained to specific web browser instances. The integration layer facilitates the integration of the cross platform application with the computing environment and communication with natively implemented processes to provide functionality including (but not limited to) desktop launch points and alerts within the computing environment based upon data pulled from remote servers by the cross platform application. In many embodiments, an integration layer serves to allow a cross platform application developed using web technologies to behave within the computing environment as if it is a conventional desktop application. In several embodiments, the integration layer exposes a number of APIs that can be called by a cross platform application to make modifications to a computing environment including APIs that allow the cross platform application to provide information to the application platform application that the application platform application can use to present alerts. In several embodiments, the integration layer APIs are JavaScript APIs that can be called by the various cross platform applications running within the application runtime environment created by the application platform application. In response to the API calls, the integration layer can communicate with the operating system and/or natively implemented processes to retrieve information from and modify the computing environment. In several embodiments, the operating system provides APIs that facilitate searching and/or exploration of the local file system.

In many embodiments, an application platform application allows the integration of cross platform applications into the computing environment of a user device by exposing a number of APIs that can be called to make modifications to a computing environment and/or communicate with operating system processes (or other native processes). In the context of a personal computer, a computing environment can include an application platform application installed on a personal computer that allows cross platform applications to modify the desktop computing environment. Application platform applications can also be implemented for installation on other classes of device such as (but not limited to) mobile phones, tablet computers, game consoles, Internet connected televisions and/or consumer electronics devices that do not utilize desktop computing environments.

In numerous embodiments, each cross platform application is continuously active (e.g. is running in the background of the computing environment) and can automatically (i.e. on demand) communicate with remote servers via a network such as the Internet to obtain additional information for alerts when the application platform application is running. Utilizing the integration with the computing environment provided by the application platform application, cross platform applications can continuously provide alerts based upon information retrieved from the remote servers and/or recommendations utilizing a recommendation client integrated with a cross platform application. In this way, the cross platform applications can be used to extend web applications and web services to a computing environment. In addition, the cross platform application can include instructions in a scripting language that causes the execution of a recommendation client within the runtime environment created by the application platform application. In many embodiments, the instructions within the cross platform application cause the downloading of the recommendation client from a remote recommendation server or the loading of the recommendation client into memory from a cache maintained on the computing device. The recommendation client itself can be implemented using the same scripting language used to implement the cross platform application.

A desktop computing environment typically includes desktop shortcuts, favorites, taskbar icons, and/or a start menu that facilitates functions including, but not limited to, the launching of desktop applications and the provision of alerts by desktop applications. In many embodiments, an application platform application allows a cross platform application to behave within the computing environment as if it is a conventional natively implemented desktop application. For example, an application platform application can provide icons for cross platform applications to be included in the task bar and/or the start menu of the computing environment. The application platform application can also apply badges or alerts to the icons. In many embodiments, the application platform application also allows a cross platform application to create desktop shortcuts to launch the cross platform application, present recommendations using an integrated application client, and can provide shell support for the cross platform application providing the cross platform application or a web application associated with the cross platform application to be associated with specific file types. In several embodiments, the cross platform application is able to behave as if it is a conventional natively implemented desktop application due to the application platform application providing mechanisms by which the cross platform application can communicate with operating system and/or other natively implemented processes. As outlined above, the application platform application can also provide launch points for natively implemented applications within user interfaces generated by the application platform application.

In various embodiments, when a cross platform application is implemented using the same technologies that are utilized to implement web applications, a cross platform application can be implemented using a background page that contains all of the logic of the cross platform application. As with a conventional web page, the background page is a text file (as opposed to a binary executable) that can include HTML, JavaScript, and/or CSS that the rendering engine layer of the application platform application parses to implement the logic contained therein. In a variety of embodiments, this process is performed in a similar fashion to the way in which the rendering engine of a web browser application parses a conventional web page when rendering a web application on a user device. In certain embodiments, instructions that initiate the execution of a recommendation client can be provided within the background page of the cross platform application to provide recommendations to the user during the execution of the cross platform application.

In addition to a background page, the cross platform application can also include one or more pop-up pages that are similar to a conventional web page and can be presented to the user to implement alerts and/or a user interface. In many embodiments, a cross platform application includes a background page and at least one pop-up page that are stored on the computing device. The application platform application implements the logic contained within the background page and can provide a user interface and/or alerts via various pop-up pages. In several embodiments, the background page retrieves information from remote server systems and generates alerts via API calls to the application platform application in response to the retrieved information. In many embodiments, the cross platform applications provide content including (but not limited to) audio, video, images and/or text to the application platform application that uses the content to generate alert pop-up pages. In several embodiments, the cross platform applications provide instructions in a scripting language such as (but not limited to) JavaScript that the application platform application uses to determine the manner in which a user can interact with the alert pop-up pages. In a variety of embodiments, the user interactions include responses to mouse overs and/or selections, although any user interaction can be utilized as appropriate to the requirements of specific embodiments of the invention. In several embodiments, instructions in the scripting language within the locally stored pop-up page and/or a pop-up page retrieved or derived from content retrieved from a remote server can be used to initiate the execution of a recommendation client and display recommendations within the user interface created by the pop-up page. In many embodiments, the instructions cause the downloading of the recommendation client from a recommendation server or the loading of the recommendation client into memory from a locally stored cache. APIs exposed by the application platform application present logic within the background page and/or the pop-up page to modify and respond to interactions with launch points such as (but not limited to) icons within the computing environment. For example, the APIs can allow any of the pages associated with the cross platform application to provide alerts by responding to an alert request from a user hovering over or clicking on the cross platform application's icon by presenting recent alerts associated with that cross platform application or certain alerts across all applications. Similarly, the APIs can allow any of the pages associated with the cross platform application to fulfill presented recommendations by responding to interaction from a user hovering over or clicking on an icon for acceptance or installation of a recommendation.

While each of the pages associated with a cross platform application are processed by the application platform application independently and do not necessarily share Document Object Model (DOM) or JavaScript contexts, the pages can communicate with each other using a Remote Procedure Call (RPC) method included in the application platform application APIs, and share data using unified local storage. This allows for a reduction in duplicate data transferring and processing, and may be used to enhance cross platform application performance by caching data.

Although specific implementations of application platform applications that support the execution of cross platform recommendation clients to identify relevant recommendation data for display via a user interface within the computing environment of a computing device are discussed above, application platform applications can be configured in any manner as appropriate to a specific application in embodiments of the invention.

Although the present invention has been described in certain specific aspects, many additional modifications and variations would be apparent to those skilled in the art. It is therefore to be understood that the present invention can be practiced otherwise than specifically described without departing from the scope and spirit of the present invention. Thus, embodiments of the present invention should be considered in all respects as illustrative and not restrictive. Accordingly, the scope of the invention should be determined not by the embodiments illustrated, but by the appended claims and their equivalents.

A further aspect of the invention includes a method for presenting recommended applications, comprising:
transmitting application recommendation request data using a recommendation client, where the application recommendation data comprises metadata describing the class of computing device corresponding to the recommendation client;
obtaining application recommendation data based on the transmitted application recommendation request data using the recommendation client, where the application recommendation data comprises references to at least one hosted application;
presenting the application recommendation data within a computing environment generated by the operating system of the recommendation client using the recommendation client, where the recommendation client is configured to present the application data using an application platform application comprising an integration layer and a rendering layer;
receiving interaction data indicative of at least one interaction with the application recommendation data using the recommendation client;
recording outcome information based on the received interaction data using the recommendation client; and
transmitting the recorded outcome information using the recommendation client.

## Claims

1. A method for requesting a cross-platform application, comprising:
executing a recommendation client as part of the text of a web page using a web browser, wherein the recommendation client retrieves resources including a recommendation list from a recommendation server,
wherein the recommendation list comprises recommendation presentation resources for at least one recommendation, wherein the recommendation presentation resources can be utilized to present a recommendation and recommendation fulfillment resources that can be utilized to facilitate fulfillment of an accepted recommendation;
utilizing the recommendation presentation resources to present a recommendation of a cross-platform application;
when the recommendation is accepted, utilizing the recommendation fulfillment resources to fulfill the accepted recommendation, wherein the recommendation fulfillment resources comprise a URL link that can be used to retrieve the cross-platform application, wherein the cross-platform application comprises a background page that contains logic of the cross platform application and a set of one or more pop-up pages;
utilizing the background page to implement the logic of the retrieved cross-platform application using an application platform application and implementing a user interface for the cross-platform application using the set of pop-up pages, wherein the application platform application comprises:
a rendering engine layer that provides for the execution of a cross platform application; and
an integration layer that exposes a number of APIs that can be called by the cross platform application to make modifications to the computing environment.

2. The method of claim 1, wherein the recommendation presentation resources comprise images and text.

3. The method of claim 1, wherein the rendering engine layer implements a virtual machine that renders a background page of the cross-platform application by interpreting instructions written in a scripting language.

4. The method of claim 3, wherein the scripting language comprises Hypertext Markup Language (HTML) instructions.

5. The method of claim 3, wherein the scripting language comprises JavaScript instructions.

6. The method of claim 3, wherein the scripting language comprises Cascading Style Sheet (CSS) instructions.

7. The method of claim 1, wherein the recommendation client is implemented utilizing JavaScript and integrated within a text file that includes HTML.

8. The method of claim 1, wherein the recommendation client further sends a recommendation list request to the recommendation server.

9. The method of claim 8, wherein the recommendation list request comprises a request for a recommendation list from the recommendation server along with information concerning the computing device that made the request.

10. The method of claim 9, wherein the information concerning the computing device comprises a physical orientation of the computing device.

11. The method of claim 9, wherein the information concerning the computing device comprises configuration information that identifies a class of the computing device.

12. A computer-readable medium comprising instructions which, when executed by a computer, cause the computer to carry out the method of claims 1 to 11.

13. A system comprising means for carrying out the method of claims 1 to 11.
